(19) **Europäisches Patentamt European Patent Office Office européen des brevets**

(11) **EP 4 776 374 A1**

(12) **EUROPEAN PATENT APPLICATION**
published in accordance with Art. 153(4) EPC

(43) Date of publication:
15.07.2026 Bulletin 2026/29

(21) Application number: 24861712.8

(22) Date of filing: 24.07.2024

(51) International Patent Classification (IPC):
$H01M\ 10/0587^{(2010.01)}$   $H01M\ 10/0525^{(2010.01)}$

(52) Cooperative Patent Classification (CPC):
Y02E 60/10; Y02P 70/50

(86) International application number:
PCT/CN2024/107287

(87) International publication number:
WO 2025/050867 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.09.2023 CN 202311152361

(71) Applicant: Ningde Amperex Technology Limited
Ningde City, 352100 (CN)

(72) Inventors:
• ZHANG, Juntao
 Fujian 352100 (CN)
• YUAN, Xiulan
 Fujian 352100 (CN)
• SU, Shiwei
 Fujian 352100 (CN)
• TIAN, Jiao
 Fujian 352100 (CN)

(74) Representative: Kraus & Lederer PartGmbB
Thomas-Wimmer-Ring 15
80539 München (DE)

(54) **ELECTRODE ASSEMBLY AND ELECTROCHEMICAL APPARATUS**

(57) This application discloses an electrode assembly and an electronic device. The electrode assembly is formed by winding a positive electrode plate, a separator, and a negative electrode plate that are stacked. The positive electrode plate includes a positive tab, a positive current collector, and a positive active material layer. A thickness of the positive current collector is T1, and a width of the positive current collector is W1. Along a first direction, a distance from the positive tab to a first termination end is A. Along a second direction, a distance from the positive tab to a first start end is B. The negative electrode plate includes a negative tab, a negative current collector, and a negative active material layer. A thickness of the negative current collector is T2, and a width of the negative current collector is W2. Along the first direction, a distance from the negative tab to the second termination end is C. Along the second direction, a distance from the negative tab to the second start end is D, satisfying: $0.8 \leq [A/(T1 \times W1) + D/(T2 \times W2)]/[B/(T1 \times W1) + C/(T2 \times W2)] \leq 1.2$, thereby offsetting magnetic fields generated by currents in two directions, achieving the effect of demagnetization on the whole, and effectively reducing interference caused by the magnetic fields of the electrode assembly onto an electronic device.

FIG. 3

**Description**

**CROSS-REFERENCE TO RELATED APPLICATIONS**

This application claims priority to Chinese Patent Application No. 202311152361.3, filed with China National Intellectual Property Administration on September 7, 2023 and entitled "ELECTRODE ASSEMBLY AND ELECTROCHEMICAL DEVICE", which is incorporated herein by reference in its entirety.

**TECHNICAL FIELD**

Embodiments of this application relates to the field of electrochemical technology, and in particular, to an electrode assembly and an electrochemical device.

**BACKGROUND**

Jelly-roll batteries are widely used in consumer batteries and power batteries due to advantages of low cost and easy production over stacked-type batteries. For a jelly-roll battery, a relatively strong axial magnetic field is typically generated at two end surfaces of the battery due to a special spiral involute structure of the electrode assembly of the battery and a characteristic that a start end and a termination end of active material layers on both sides of the positive and negative electrode plates typically do not overlap in order to prevent lithium plating. For a battery with a strong magnetic field, in some application scenarios, the battery causes considerable interference to electronic devices. For example, a large cylindrical battery interferes with a circuit board, a small jelly-roll battery interferes with a current sound of a Bluetooth headset, or a battery affects wireless charging efficiency. Therefore, reducing the magnetic field of a jelly-roll battery is a pressing technical challenge.

**SUMMARY**

Some embodiments of this application provide an electrode assembly and an electrochemical device to alleviate the technical problem of interference caused by the magnetic fields of a battery onto an electronic device.

To solve the technical problem, some embodiments of this application put forward the following technical solution:

According to a first aspect, this application provides an electrode assembly. The electrode assembly is formed by winding a positive electrode plate, a separator, and a negative electrode plate that are stacked. The separator is disposed between the positive electrode plate and the negative electrode plate. The positive electrode plate is located on one side of the negative electrode plate, the side facing away from a winding center of the electrode assembly. The positive electrode plate includes a positive tab, a positive current collector, and a positive active material layer. The positive tab is connected to the positive current collector. The positive active material layer is disposed on at least one surface of the positive current collector. A thickness of the positive current collector is T1, and a width of the positive current collector is W1. Along a first direction, the positive current collector includes a positive electrode winding start end and a positive electrode winding termination end. An end of the positive active material layer, which is closest to the positive electrode winding start end, is a first start end, and an end of the positive active material layer, which is closest to the positive electrode winding termination end, is a first termination end. Along the first direction, a distance from the positive tab to the first termination end is A. Along a second direction, a distance from the positive tab to the first start end is B. The first direction is a winding direction of the electrode assembly, and the second direction is opposite to the first direction; The negative electrode plate includes a negative tab, a negative current collector, and a negative active material layer. The negative tab is connected to the negative current collector. The negative active material layer is disposed on at least one surface of the negative current collector. A thickness of the negative current collector is T2, and a width of the negative current collector is W2. Along the first direction, the negative current collector includes a negative electrode winding start end and a negative electrode winding termination end. An end of the negative active material layer, which is closest to the negative electrode winding start end, is a second start end, and an end of the negative active material layer, which is closest to the negative electrode winding termination end, is a second termination end. Along the first direction, a distance from the negative tab to the second termination end is C. Along the second direction, a distance from the negative tab to the second start end is D, satisfying: $0.8 \leq [A/(T1 \times W1) + D/(T2 \times W2)]/[B/(T1 \times W1) + C/(T2 \times W2)] \leq 1.2$, where W1 < W2.

In the above technical solution, because a magnetic field generated by an electrical current is proportional to both the intensity of the current and the distance of the current, in the case that the total charge flowing through the positive current collector is the same as that flowing through the negative current collector, the intensity of the current is inversely proportional to the cross-sectional area of the current collector. The intensity of the magnetic field generated by the current travelling a distance in the first direction X is reflected by $A/(T1{\times}W1)+D/(T2{\times}W2)$, and the intensity of the magnetic field generated by the current travelling a distance in the second direction Y is reflected by $B/(T1 \times W1)+C/(T2 \times W2)$. By controlling satisfaction of $0.8 \leq [A/(T1 \times W1) + D/(T2 \times W2)]/[B/(T1 \times W1) + C/(T2 \times W2)] \leq 1.2$, this application offsets the magnetic fields generated by the currents in the two directions, thereby achieving the effect of demagnetization on the whole, and effectively reducing interference caused by the magnetic fields of the electrode assembly onto an electronic device.

Further, by satisfying $0.94 \leq [A/(T1 \times W1) + D/(T2 \times W2)]/[B/(T1 \times W1) + C/(T2 \times W2)] \leq 1.05$, this application can further weaken the magnetic field, thereby further reducing the interference caused by the magnetic field of the electrode assembly onto the electronic device, and ensuring normal operation of the electronic device.

In some preferred embodiments, the positive current collector includes a first blank foil section and a first coated section. The first blank foil section and the first coated section are sequentially arranged along the first direction. The positive tab is connected to the first blank foil section, and the first coated section is coated with the positive active material layer.

Optionally, the positive current collector includes a first blank foil section and a first coated section, and the first blank foil section and the first coated section are sequentially arranged along the second direction. The positive tab is connected to the first blank foil section, and the first coated section is coated with the positive active material layer.

In some preferred embodiments, the positive current collector further includes a second coated section. The second coated section, the first blank foil section, and the first coated section are sequentially arranged along the first direction. The second coated section is coated with the positive active material layer. The positive tab is located between the two coated sections, allowing the current to flow through the positive active material layers on both coated sections simultaneously, thereby increasing the charge rate and the discharge rate.

Optionally, the negative current collector includes a second blank foil section and a third coated section. The second blank foil section and the third coated section are sequentially arranged along the second direction. The third coated section is coated with the negative active material layer, and the negative tab is connected to the second blank foil section.

In some preferred embodiments, the negative current collector includes a second blank foil section and a third coated section. The second blank foil section and the third coated section are sequentially arranged along the first direction. The third coated section is coated with the negative active material layer, and the negative tab is connected to the second blank foil section.

In some preferred embodiments, the negative current collector further includes a fourth coated section. The fourth coated section, the second blank foil section, and the third coated section are sequentially arranged along the first direction. The fourth coated section is coated with the negative active material layer. The negative tab is located between the two coated sections, allowing the current to flow through the negative active material layers on both coated sections simultaneously, thereby increasing the charge rate and the discharge rate.

In some preferred embodiments, the positive electrode plate includes a plurality of positive tabs. Each of the positive tabs is connected to the positive current collector, and the plurality of positive tabs are sequentially arranged along the first direction. The distance from the positive tab at the termination end of the arrangement to the first termination end in the first direction is A. The distance from the positive tab at the start end of the arrangement to the first start end in the second direction is B. The plurality of positive tabs make it convenient to improve the charge rate and the discharge rate.

In some preferred embodiments, the negative electrode plate includes a plurality of negative tabs. Each of the negative tabs is connected to the negative current collector, and the plurality of negative tabs are sequentially arranged along the first direction. The distance from the negative tab at the termination end of the arrangement to the second termination end in the first direction is C. The distance from the negative tab at the start end of the arrangement to the second start end in the second direction is D. The plurality of negative tabs make it convenient to improve the charge rate and the discharge rate.

In some preferred embodiments, the electrode assembly further includes a first insulation piece and a second insulation piece. The first insulation piece covers the positive tab, and the second insulation piece covers the negative tab, thereby isolating the positive tab from the negative tab, and reducing the probability of short-circuiting.

In some preferred embodiments, the first insulation piece extends to the positive active material layer, thereby reducing the probability that the structures such as the positive tab and the protrusions and burrs at the edge of the positive active material layer pierce the separator, and consequently reducing the probability of short-circuiting. The second insulation piece extends to the negative active material layer, thereby reducing the probability that the structures such as the negative tab and the protrusions and burrs at the edge of the negative active material layer pierce the separator, and consequently reducing the probability of short-circuiting.

According to a second aspect, this application further provides an electronic device. The electronic device includes a housing and the electrode assembly disclosed in any one of the embodiments in the first aspect. The electrode assembly is accommodated in the housing, and both the positive tab and the negative tab extend out of the housing.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

## BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the dimensions in the drawings do not constitute any scale limitation.

FIG. 1 is a schematic diagram of a jelly-roll structure of an electrode assembly according to some embodiments of this application;
FIG. 2 is a schematic structural diagram of a positive electrode plate according to some embodiments of this application;
FIG. 3 is a schematic diagram of a stacked structure of a positive electrode plate and a negative electrode plate according to some embodiments of this application;
FIG. 4 is a schematic structural diagram of a negative electrode plate according to some embodiments of this application;
FIG. 5 is a schematic diagram of a stacked structure of a positive electrode plate and a negative electrode plate according to some embodiments of this application;
FIG. 6 is a schematic diagram of a stacked structure of a positive electrode plate and a negative electrode plate according to some embodiments of this application;
FIG. 7 is a schematic diagram of a stacked structure of a positive electrode plate and a negative electrode plate according to some embodiments of this application;
FIG. 8 is a schematic diagram of a stacked structure of a positive electrode plate and a negative electrode plate according to some embodiments of this application;
FIG. 9 is a schematic structural diagram of a positive electrode plate and a negative electrode plate according to some embodiments of this application; and
FIG. 10 is a schematic structural diagram of a positive electrode plate and a negative electrode plate according to some embodiments of this application.

List of reference signs:

100. electrode assembly;
10. positive electrode plate; 11. positive current collector; 11a. first main surface; 111. first coated section; 112. first blank foil section; 113. second coated section; 114. positive electrode winding start end; 115. positive electrode winding termination end; 12. positive active material layer; 121. first start end; 122. first termination end; 13. positive tab; 13a. first start tab; 13b. first termination tab;
20. negative electrode plate; 21. negative current collector; 21a. second main surface; 211. third coated section; 212. second blank foil section; 213. fourth coated section; 214. negative electrode winding start end; 215. negative electrode winding termination end; 22. negative active material layer; 221. second start end; 222. second termination end; 23. negative tab; 22a. second start tab; 23b. second termination tab;
30. separator;
40. first insulation piece;
50. second insulation piece;
X. first direction; Y second direction; Z. third direction; H. fourth direction

## DETAILED DESCRIPTION

Some embodiments of the technical solutions of this application are described in detail below with reference to the drawings. The following embodiments are merely intended as examples to describe the technical solutions of this application more clearly, but not intended to limit the protection scope of this application.

It is noted that an element referred to herein as being "disposed on" another element may be directly disposed on the other element, or may be disposed on the other element with one or more elements in between. An element referred to herein as "connected to" or "welded to" another element may be connected or welded to the other element directly or with one or more elements in between.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. In addition, to the extent that no mutual conflict occurs, the technical features described below in different embodiments of this application may be combined with each other.

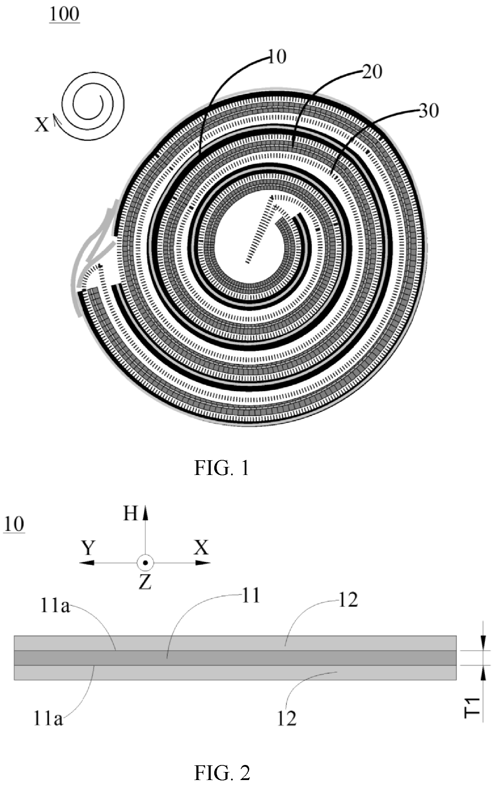

According to a first aspect, this application discloses an electrode assembly 100. Referring to FIG. 1, the electrode assembly 100 includes a positive electrode plate 10, a separator 30, and a negative electrode plate 20. The positive electrode plate 10, the separator 30, and the negative electrode plate 20 are stacked and then wound to form a jelly-roll electrode assembly 100. The positive electrode plate 10 is located on one side of the negative electrode plate 20, the side facing away from a winding center of the electrode assembly 100. The separator 30 is disposed between the positive electrode plate 10 and the negative electrode plate 20 to separate the two electrode plates.

For the positive electrode plate 10, referring to FIG. 2, the positive electrode plate 10 includes a positive current collector 11 and a positive active material layer 12. The positive active material layer 12 may be disposed on at least one surface of the positive current collector 11. For example, the positive current collector 11 may be a flat, strip-shaped structure on the whole. Along the thickness direction (the fourth direction H) of the positive current collector 11, the positive current collector 11 includes two first main surfaces 11a disposed opposite to each other. The positive active material layer 12 may be disposed on both first main surfaces 11a.

The positive current collector 11 may be made of aluminum foil or composite aluminum foil containing a polymer layer. The thickness of the positive current collector 11 (the thickness along the fourth direction H) is T1, and the width of the positive current collector (the width along the third direction Z) is W1. The positive active material layer 12 includes a positive active material, a conductive agent, a binder, deionized water, and the like. The above materials are mixed and stirred well and then applied onto at least one first main surface 11a to form a positive active material layer 12. The positive active material may be one or more selected from lithium nickel cobalt manganese oxide, lithium nickel cobalt manganese oxide, lithium cobalt oxide, lithium iron phosphate, lithium nickel cobalt manganese oxide, lithium manganese oxide, lithium manganese iron phosphate, or a cobalt-free material.

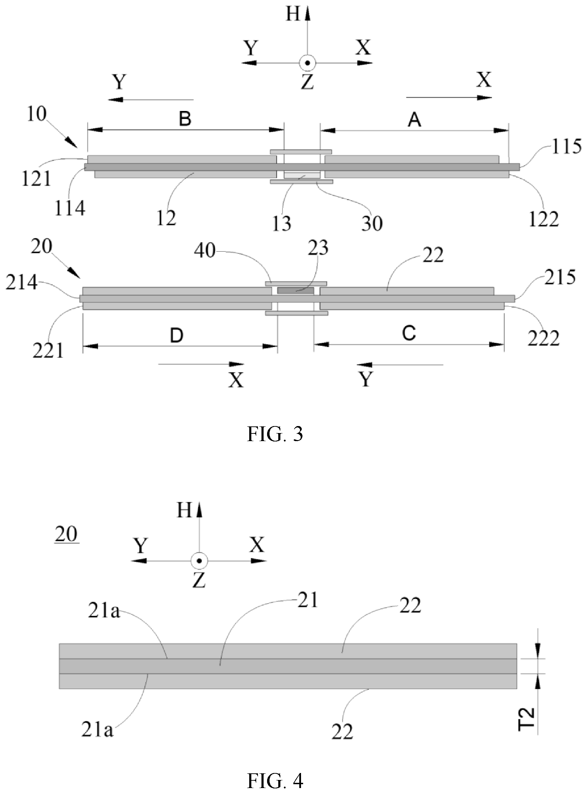

Still referring to FIG. 3, the positive electrode plate 10 further includes a positive tab 13. The positive tab 13 is electrically connected to the positive current collector 11. For example, the positive tab 13 is connected to the positive current collector 11 by means of welding, conductive adhesive, integral formation, or other means. After the positive electrode plate 10, the separator 30, and the negative electrode plate 20 are stacked and then wound to form an electrode assembly 100, the positive tab 13 extends out in the third direction Z. The positive tab 13 may be a metal sheet that connects the positive electrode plate 10 to an external circuit, for example, a conductive metal sheet made of aluminum or nickel or the like and configured to implement electrical conduction with the external circuit.

Along the first direction X, the positive current collector 11 includes a positive electrode winding start end 114 and a positive electrode winding termination end 115. The positive active material layer 12 includes a first start end 121 and a first termination end 122. An end of the positive active material layer 12, which is closest to the positive electrode winding start end 114, is the first start end 121, and an end of the positive active material layer 12, which is closest to the positive electrode winding termination end 115, is the first termination end 122. The positive tab 13 may be disposed near the first start end 121, or near the first termination end 122, or between the first start end 121 and the first termination end 122. Along the first direction X, the distance from the positive tab 13 to the first termination end 122 is A. Along the second direction Y, the distance from the positive tab 13 to the first start end 121 is B. The first direction X is a winding direction of the electrode assembly 100 (that is, a direction in which the positive electrode plate 10, the separator 30, and the negative electrode plate 20 are wound after being stacked; before the stacked structure is wound, the first direction X may also be considered a length direction of the positive electrode plate 10, the separator 30, or the negative electrode plate 20). The second direction Y is opposite to the first direction X. It is noted that the first start end 121 and the first termination end 122 are not necessarily located on the positive active material layer 12 on the same side. An end portion of the positive active material layer 12, which is closest to the positive electrode winding start end 114 of the positive current collector 11, is the first start end 121, and an end portion closest to the positive electrode winding termination end 115 of the positive current collector 11 is the first termination end 122.

For the negative electrode plate 20, referring to FIG. 3 and FIG. 4, the negative electrode plate 20 and the positive electrode plate 10 are of opposite polarities. The negative electrode plate 20 includes a negative current collector 21 and a negative active material layer 22. The negative active material layer 22 may be disposed on at least one surface of the negative current collector 21. For example, the negative current collector 21 is a flat, strip-shaped structure on the whole. Along the thickness direction (the fourth direction H) of the negative current collector 21, the negative current collector 21 includes two second main surfaces 21a disposed opposite to each other. The negative active material layer 22 may be disposed on both second main surfaces 21a.

The negative current collector 21 may be made of copper foil or composite copper foil containing a polymer layer. The thickness of the negative current collector 21 (the thickness along the fourth direction H) is T2, and the width of the negative current collector (the width along the third direction Z) is W2. The polymer layer may be made of one or more materials selected from polyethylene terephthalate, polyethylene, polypropylene, polyamide, polyimide, polyvinyl chloride, or polystyrene. The positive active material layer 12 includes a negative active material, a conductive agent, a binder, deionized water, and the like. The above materials are mixed and stirred well and then applied onto at least one first main surface 11a to form a positive active material layer 12. The negative active material may be one or more selected from graphite, soft carbon, hard carbon, carbon fiber, mesocarbon microbeads, silicon, an oxide of silicon, a silicon-carbon composite, or a silicon alloy. In other embodiments, the positive electrode plate 10 may be a negative electrode plate, and the negative electrode plate 20 is a positive electrode plate accordingly. The polarity of the electrode plate is not limited herein.

The negative electrode plate 20 further includes a negative tab 23. The negative tab 23 is electrically connected to the negative current collector 21. For example, the negative tab 23 is connected to the negative current collector 21 by means of welding, conductive adhesive, integral formation, or other means. After the positive electrode plate 10, the separator 30, and the negative electrode plate 20 are stacked and then wound to form an electrode assembly 100, both the negative tab 23 and the positive tab 13 extend out in the third direction Z. The negative tab 23 may be a metal sheet that connects the negative electrode plate 20 to an external circuit, for example, a conductive metal sheet made of copper or nickel or the like and configured to implement electrical conduction with the external circuit.

Along the first direction X, the negative current collector 21 includes a negative electrode winding start end 24 and a negative electrode winding termination end 25. The negative active material layer 22 includes a second start end 221 and a second termination end 222. An end of the negative active material layer 22, which is closest to the negative electrode winding start end 24, is the second start end 221, and an end of the negative active material layer 22, which is closest to the negative electrode winding termination end 25, is the second termination end 222. The negative tab 23 may be disposed near the second start end 221, or near the second termination end 222, or between the second start end 221 and the first termination end 122. Along the first direction X, the distance from the negative tab 23 to the second termination end 222 is C. Along the second direction Y, the distance from the negative tab 23 to the second start end 221 is D.

It is noted that the second start end 221 and the second termination end 222 are not necessarily located on the negative active material layer 22 on the same side. An end portion of the negative active material layer 22, which is closest to the negative electrode winding start end 24 of the negative current collector 21, is the second start end 221, and an end portion closest to the negative electrode winding termination end 25 of the negative current collector 21 is the second termination end 222.

In addition, the distance from the negative tab 23 to the second termination end 222 means a distance between one side, closest to the second termination end 222, of the negative tab 23 and the second termination end 222; and the distance from the negative tab 23 to the second start end 221 means a distance between one side, closest to the second start end 221, of the negative tab 23 and the second start end 221. The same applies to the positive tab 13.

The following relationship is satisfied: $0.8 \leq [A/(T1 \times W1) + D/(T2 \times W2)]/[B/(T1 \times W1) + C/(T2 \times W2)] \leq 1.2$, where W1 < W2. When a current flows through the positive active material layer 12 through the positive tab 13, a first current path is formed from the positive tab 13 to the first termination end 122 along the first direction X; and a second current path is formed from the positive tab 13 to the first start end 121 along the second direction Y. The current flow direction of the first current path is opposite to the current flow direction of the second current path.

When the current flows through the negative active material layer 22 through the negative tab 23, a third current path is formed between the negative tab 23 and the second termination end 222 along the first direction X; and a fourth current path is formed between the negative tab 23 and the second start end 221 along the second direction Y. The current flow direction of the third current path is opposite to the current flow direction of the fourth current path. The direction of current means a direction in which electric charge flows in a conductor. By definition, the current flow direction is defined as a direction in which positive charge flows. The positive electrode plate 10 and the negative electrode plate 20 are of opposite polarities. The first current path and the fourth current path are in the same direction, and the second current path and the third current path are in opposite directions.

The magnetic field of a jelly-roll electrode assembly 100 means a magnetic field generated by the current passing through the electrode assembly 100. When the current passes through the electrode assembly 100, a circular magnetic field is formed around the electrode assembly. According to Ampere's circuit theorem, a magnetic field generated by an electrical current is proportional to both the intensity of the current and the distance of the current. In the case that the total charge flowing through the positive current collector 11 is the same as that flowing through the negative current collector 21, the intensity of the current is inversely proportional to the cross-sectional area of the current collector. In an embodiment of this application, the intensity of the magnetic field generated by the current travelling a distance in the first direction X is reflected by $A/(T1 \times W1)+D/(T2 \times W2)$, and the intensity of the magnetic field generated by the current travelling a distance in the second direction Y is reflected by $B/(T1 \times W1) + C/(T2 \times W2)$. By controlling satisfaction of $0.8 \leq [A/(T1 \times W1) + D/(T2 \times W2)]/[B/(T1 \times W1) + C/(T2 \times W2)] \leq 1.2$, this application offsets the magnetic fields generated by the currents in the two directions, thereby achieving the effect of demagnetization on the whole, and effectively reducing interference caused by the magnetic fields of the electrode assembly 100 onto an electronic device.

Optionally, by satisfying $0.94 \leq [A/(T1 \times W1) + D/(T2 \times W2)]/[B/(T1 \times W1) + C/(T2 \times W2)] \leq 1.05$, this application can further weaken the magnetic field, thereby further reducing the interference caused by the magnetic field of the electrode assembly 100 onto the electronic device, and ensuring normal operation of the electronic device.

Regarding the separator 30, referring to FIG. 1, the separator 30 is disposed between the positive electrode plate 10 and the negative electrode plate 20 to separate the two electrode plates. The separator 30 may be bonded between the positive electrode plate 10 and the negative electrode plate 20 to increase the overall bonding strength of the electrode assembly 100. The separator 30 may be one or more of a polyethylene separator, a ceramic-containing polyethylene-coated separator, an adhesive-coating-containing polyethylene-coated separator, a polypropylene separator, or a polypropylene-coated separator.

In other embodiments, referring to FIG. 3, the electrode assembly 100 further includes a first insulation piece 40 and a second insulation piece 50. The first insulation piece 40 is disposed on the positive active material layer 12, and the first insulation piece 40 covers the positive tab 13. The second insulation piece 50 is disposed on the negative active material layer 22, and the second insulation piece 50 covers the negative tab 23, thereby reducing the probability of a short circuit caused by direct contact between the positive tab 13 and the negative tab 23. In addition, the first insulation piece 40 covers a junction between the positive active material layer 12 and the positive tab 13, thereby reducing the probability that the structures such as the positive tab 13 and the protrusions and burrs at the edge of the positive active material layer 12 pierce the separator, and consequently reducing the probability of short-circuiting. The second insulation piece 50 covers a junction between the negative active material layer 22 and the negative tab 23, thereby reducing the probability that the structures such as the negative tab 23 and the protrusions and burrs at the edge of the negative active material layer 22 pierce the separator, and consequently further reducing the probability of short-circuiting.

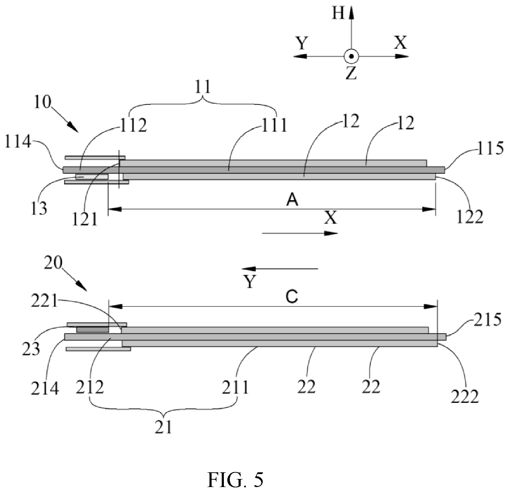

Referring to FIG. 5, the positive tab 13 is disposed near the first start end 121. The positive current collector 11 includes a first blank foil section 112 and a first coated section 111. The first blank foil section 112 and the first coated section 111 are sequentially arranged along the first direction X. The first coated section 111 is a part of the positive current collector 11, the part being coated with the first active material layer. The first blank foil section 112 is a part of the positive current collector 11, the part being coated with no positive active material layer 12. The positive tab 13 is directly electrically connected to the positive current collector 11 at the first blank foil section 112. The first start end 121 is positioned near the first blank foil section 112. Along the first direction X, the distance from the positive tab 13 to the first termination end 122 is A. However, the positive tab 13 is coated with no positive active material layer 12 in the second direction Y, indicating that the distance B from the positive tab 13 to the first start end 121 along the second direction Y is 0.

The negative tab 23 is disposed near the second start end 221. The negative current collector 21 includes a second blank foil section 212 and a third coated section 211. The second blank foil section 212 and the third coated section 211 are sequentially arranged along the first direction X. The third coated section 211 is a part coated with the negative active material layer 22. The second blank foil section 212 is a part coated with no negative active material layer 22. The negative tab 23 is directly electrically connected to the negative current collector 21 at the second blank foil section 212. The second start end 221 is positioned near the second blank foil section 212. Along the first direction X, the distance from the negative tab 23 to the second termination end 222 is C. However, the negative tab 23 is coated with no negative active material layer 22 in the second direction Y, indicating that the distance D from the negative tab 23 to the second start end 221 along the second direction Y is 0. In this case, the following relationship is satisfied: $0.8 \leq [A/(T1 \times W1)]/[C/(T2 \times W2)] \leq 1.2$, thereby improving the effect of demagnetization of the electrode assembly 100.

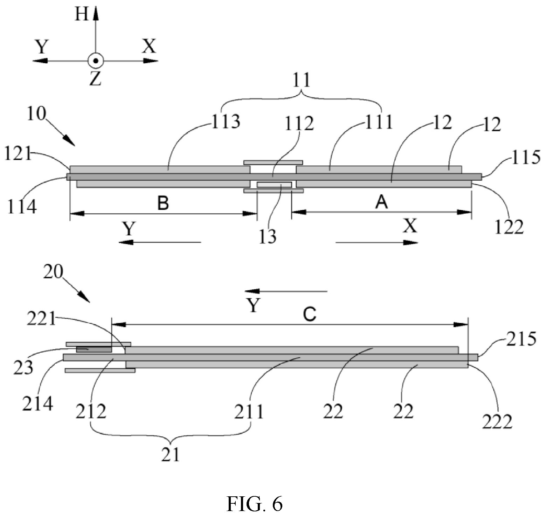

Referring to FIG. 6, the positive current collector 11 further includes a second coated section 113. The second coated section 113, the first blank foil section 112, and the first coated section 111 are sequentially arranged along the first direction X. The second coated section 113 is also coated with the positive active material layer 12. Along the first direction X, the distance from the positive tab 13 to the first termination end 122 is A. Along the second direction Y, the distance from the positive tab 13 to the first start end 121 is B. The negative tab 23 is disposed near the second start end 221. Along the first direction X, the distance from the negative tab 23 to the second termination end 222 is C. Along the second direction Y, the distance D from the negative tab 23 to the second start end 221 is 0. The direction of the current that travels the distance A is opposite to the direction of the current that travels the distance C. In this case, the parameters satisfy $0.8 \leq [A/(T1 \times W1)]/[B/(T1 \times W1) + C/(T2 \times W2)] \leq 1.2$, thereby achieving a superior effect of demagnetization.

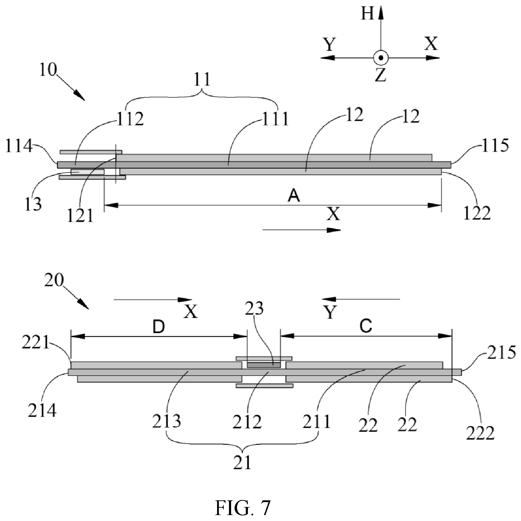

Referring to FIG. 7, the positive tab 13 is disposed near the first start end 121. Along the first direction X, the distance from the positive tab 13 to the first termination end 122 is A. Along the second direction Y, the distance B from the positive tab 13 to the first start end 121 is 0. The negative current collector 21 further includes a fourth coated section 213. The fourth coated section 213, the second blank foil section 212, and the third coated section 211 are sequentially arranged along the first direction X. The fourth coated section 213 is coated with the negative active material layer 22. Along the first direction X, the distance from the negative tab 23 to the second termination end 222 is C. Along the second direction Y, the distance from the negative tab 23 to the second start end 221 is D. In this case, the parameters satisfy $0.8 \leq [A/(T1 \times W1) + D/(T2 \times W2)]/[C/(T2 \times W2)] \leq 1.2$, thereby improving a superior effect of demagnetization.

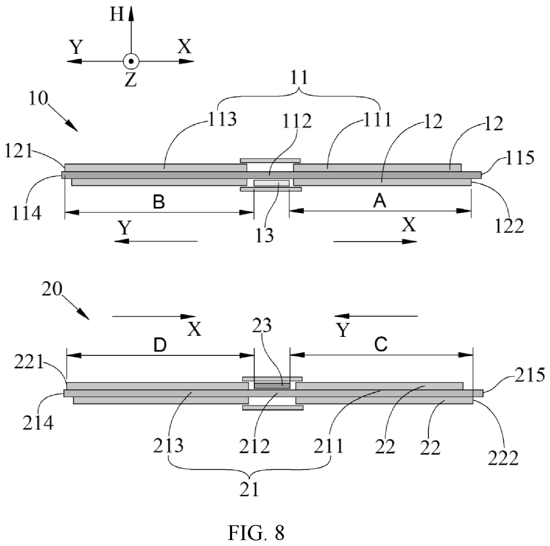

Referring to FIG. 8, when the positive active material layer 12 exists in both the first direction X and the second direction Y of the positive tab 13, and the negative active material layer 22 exists in both the first direction X and the second direction Y of the negative tab 23, then the parameters satisfying $0.8 \leq [A/(T1 \times W1) + D/(T2 \times W2)]/[B/(T1 \times W1) + C/(T2 \times W2)] \leq 1.2$ can achieve a superior effect of demagnetization.

Optionally, the first blank foil section 112 and the first coated section 111 may also be sequentially arranged along the second direction Y. The positive tab 13 is connected to the first blank foil section 112, and the first coated section 111 is coated with the positive active material layer 12. In this case, A is 0. Similarly, the second blank foil section 212 and the third coated section 211 are sequentially arranged along the second direction Y. The third coated section 211 is coated with the negative active material layer 22, and the negative tab 23 is connected to the second blank foil section 212. In this case, C is 0.

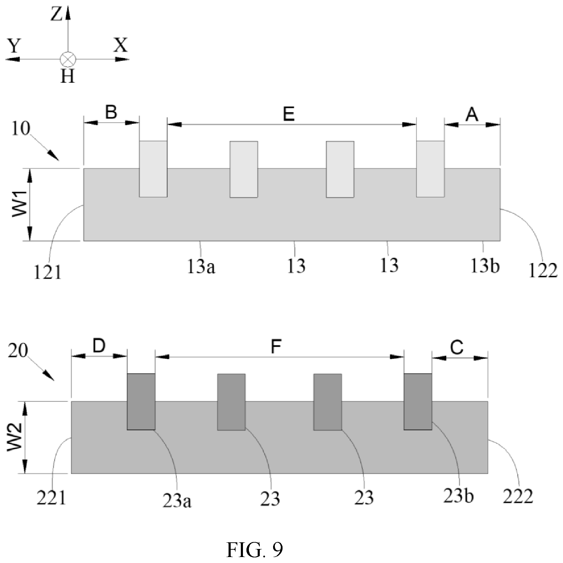

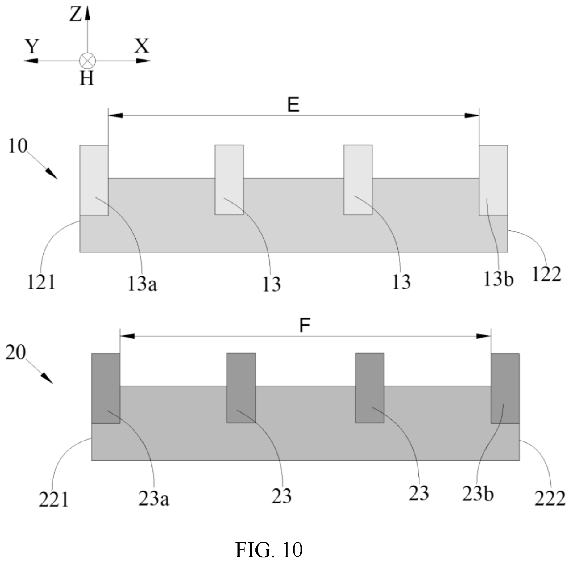

In some embodiments, referring to FIG. 9 and FIG. 10, the positive electrode plate 10 includes a plurality of positive tabs 13. Along the first direction X, a plurality of positive tabs 13 are sequentially arranged and electrically connected to the positive current collector 11. The plurality of positive tabs 13 extend out in the third direction Z. Along the first direction X, the positive tab 13 at the start end of the arrangement (denoted as a first start tab 13a) is disposed near the first start end 121, and the positive tab 13 at the termination end of the arrangement (denoted as a first termination tab 13b) is disposed near the first termination end 122.

The first start end 121 may be located in the first direction X of the first start tab 13a, or may be located in the second direction Y of the first start tab 13a.

Referring to FIG. 9, the first start end 121 is located in the second direction Y of the first start tab 13a, and the first termination end 122 is located in the first direction X of the first termination tab 13b. Along the second direction Y, the distance from the first start tab 13a to the first start end 121 is B. Along the first direction X, the distance from the first termination tab 13b to the first termination end 122 is A. A common region E exists between the first start tab 13a and the first termination tab 13b. Both the current flowing in the first direction X and the current flowing in the second direction Y flow through the common region. Therefore, the common region E is negligible. Furthermore, regardless of the number of positive tabs 13 disposed in the common region E, the positive tabs are negligible.

Referring to FIG. 10, when the first start end 121 is in the first direction X of the first start tab 13a and the first termination end 122 is in the second direction Y of the first termination tab 13b, then all the region between the first start tab 13a and the first termination tab 13b is the common region E, thereby directly satisfying the condition that the travel distances of the currents in the two directions are equal.

When the negative electrode plate 20 includes a plurality of negative tabs 23, the negative tabs may be arranged similarly with reference to the above description about the positive electrode plate 10. Referring to FIG. 9, along the first direction X, the negative tab 23 at the start end of the arrangement (denoted as a second start tab 23a) is disposed near the second start end 221, and the negative tab 23 at the termination end of the arrangement (denoted as a second termination tab 23b) is disposed near the second termination end 222. The second start end 221 is located in the second direction Y of the second start tab 23a, and the second termination end 222 is located in the first direction X of the second termination tab 23b. Along the second direction Y, the distance from the second start tab 23a to the second start end 221 is D. Along the first direction X, the distance from the second termination tab 23b to the second termination end 222 is C. A common region F exists between the second start tab 23a and the second termination tab 23b. Both the current flowing in the first direction X and the current flowing in the second direction Y flow through the common region. Therefore, the common region F is negligible. Furthermore, regardless of the number of negative tabs 23 disposed in the common region F, the negative tabs are negligible.

Referring to FIG. 10, when the second start end 221 is in the first direction X of the second start tab 23a and the second termination end 222 is in the second direction Y of the second termination tab 23b, then all the region between the second start tab 23a and the second termination tab 23b is the common region F, thereby directly satisfying the condition that the travel distances of the currents in the two directions are equal, and consequently further improving the effect of demagnetization.

In an embodiment of this application, the parameters satisfy: $0.8 \leq [A/(T1 \times W1) + D/(T2 \times W2)]/[B/(T1 \times W1) + C/(T2 \times W2)] \leq 1.2$, indicating that the travel distance of the current in the first direction X is approximately equal to the travel distance of the current in the second direction Y of the electrode assembly 100, thereby offsetting magnetic fields generated by the currents in the two directions, achieving the effect of demagnetization on the whole, and effectively reducing interference caused by the magnetic fields of the electrode assembly 100 onto an electronic device.

In some embodiments of this application, a jelly-roll lithium-ion battery is used as an example to perform a magnetic field intensity test on the battery.

**Embodiment 1**

Preparation of a positive electrode plate:

Mixing lithium cobalt oxide ($LiCoO_2$) as a positive active material, conductive carbon black as a conductive agent, and polyvinylidene fluoride (PVDF) as a binder at a mass ratio of 97.5 : 1 : 1.5, and adding N-methyl-pyrrolidone (NMP) as a solvent to formulate a slurry in which the solid content is 75 wt%, and stirring well. Using 9 $\mu$m-thick aluminum foil (the thickness is denoted as T1) as a positive current collector. Dividing the aluminum foil into a second coated section, a first blank foil section, and a first coated section sequentially along the length direction of the aluminum foil. Applying the slurry evenly onto the first coated section and the second coated section on one surface of the aluminum foil. Denoting one end of the second coated section, located away from the first coated section, as a first start end. Denoting one end of the first coated section, located away from the second coated section, as a first termination end. Oven-drying the coated electrode plate at 90 °C to obtain a positive electrode plate coated with a positive active material that weighs 17.2 mg/cm$^2$. The coating on a single side of the positive electrode plate is completed upon completion of the above steps. Subsequently, repeating the above steps on the other surface of the positive electrode plate to obtain a positive electrode plate coated with positive active material layers on both sides. Performing cold-pressing, cutting, and slitting for the coated electrode plate, so as to obtain a positive electrode plate, which is 1210 mm × 72.7 mm (width W1) in size.

Preparation of a negative electrode plate:

Mixing graphite powder as a negative active material, conductive carbon black (Super P) as a conductive agent, and styrene butadiene rubber (SBR) as a binder at a mass ratio of 97.5: 1: 1.5, and then adding deionized water as a solvent to formulate a slurry in which the solid content is 50 wt%, and stirring well. Using 5 $\mu$m-thick copper foil (the thickness is denoted as T2) as a negative current collector. Dividing the negative current collector into a fourth coated section, a second blank foil section, and a third coated section sequentially along the length direction of the current collector. Applying the slurry evenly onto the third coated section and the fourth coated section on one surface of the copper foil. Denoting one end of the fourth coated section, located away from the third coated section, as a second start end. Denoting one end of the third coated section, located away from the fourth coated section, as a second termination end. Oven-drying the coated electrode plate at 110 °C to obtain a negative electrode plate coated with a negative active material that weighs 9.1 mg/cm$^2$ on a single side. The coating on a single side of the negative electrode plate is completed upon completion of the above steps. Subsequently, repeating the above steps on the other surface of the negative electrode plate to obtain a negative electrode plate coated with the negative active material layer on both sides. Performing cold-pressing, cutting, and slitting for the coated electrode plate, so as to obtain a negative electrode plate, which is 1220 mm × 74.2 mm (width W2) in size.

Preparation of a separator:

Using a 5 $\mu$m-thick polyethylene porous film as a substrate layer. Applying a 3 $\mu$m-thick ceramic layer onto one surface of the substrate layer in the middle part of the substrate player (the middle part is the middle part in the width direction, that is, the second part; and the parts at two ends in the width direction are a first part and a third part respectively). Applying a 2 $\mu$m-thick PVDF binder layer onto both surfaces of the substrate layer, where the binder layer covers the ceramic layer in the second part, and neither the first part nor the third part contains a ceramic layer.

Preparation of an electrode assembly

Using a nickel sheet as a positive tab, and welding the positive tab to the first blank foil region of the positive current collector aluminum foil, where the distance A from the positive tab to the first termination end is 500 mm, and the distance B from the positive tab to the first start end is 500 mm.
Using a copper sheet as a negative tab, and welding the negative tab to the second blank foil region of the negative current collector copper foil, where the distance C from the negative tab to the second termination end is 505 mm, and the distance D from the negative tab to the second start end is 505 mm.
Stacking the negative electrode plate, the separator, and the positive electrode plate in sequence, and winding the stacked structure to form a jelly-roll electrode assembly, where the winding begins with the first start end.

Preparation of a lithium-ion battery

Performing processes such as aluminum laminated film sealing, electrolyte injection, and chemical formation on the electrode assembly to form a lithium-ion battery.

**Embodiment 2**

Differences from Embodiment 1 are as follows:
A = 450 mm; B = 550 mm; C = 580 mm; D = 440 mm; T1 = 8.5 $\mu$m; and T2 = 6.5 $\mu$m.

**Embodiment 3**

Differences from Embodiment 1 are as follows:
A = 450 mm; B = 550 mm; C = 560 mm; and D = 450 mm.

**Embodiment 4**

Differences from Embodiment 1 are as follows:
A = 500 mm; B = 500 mm; C = 560 mm; and D = 450 mm.

**Embodiment 5**

Differences from Embodiment 1 are as follows:
A = 550 mm; B = 450 mm; C = 560 mm; and D = 450 mm.

**Embodiment 6**

Differences from Embodiment 1 are as follows:
A = 550 mm; B = 450 mm; C = 510 mm; and D = 500 mm.

**Embodiment 7**

Differences from Embodiment 1 are as follows:
A= 600 mm; B = 400 mm; C = 510 mm; D = 500 mm; T1 = 7 $\mu$m; and T2 = 6 $\mu$m.

**Embodiment 8**

Differences from Embodiment 1 are as follows: The first blank foil section is located at the winding start end of the positive electrode plate. The positive current collector includes a first coated section alone. The first coated section is located in the first direction (winding direction) of the first blank foil section. The distance A from the positive tab to the first termination end is 1000 mm. No active material layer is applied in the second direction (opposite to the winding direction) of the positive tab, and B = 0.
The second blank foil section is located at the winding start end of the negative electrode plate. The negative current collector includes the third coated section alone. The third coated section is located in the first direction (winding direction) of the second blank foil section. The distance C from the negative tab to the second termination end is 1020 mm. No active material layer is applied in the second direction of the negative tab. D = 0; T1 = 8 $\mu$m; and T2 = 6.5 $\mu$m.

**Embodiment 9**

Differences from Embodiment 1 are as follows: A= 950 mm; and B = 100 mm.
The second blank foil section is located at the winding start end of the negative electrode plate. The negative current collector includes a third coated section alone. The third coated section is located in the first direction (winding direction) of the second blank foil section. The distance B from the negative tab to the second termination end is 1020 mm. No active material layer is applied in the second direction of the negative tab. D = 0; T1 = 7.5 $\mu$m; and T2 = 7 $\mu$m.

**Embodiment 10**

Differences from Embodiment 1 are as follows: The first blank foil section is located at the winding start end of the positive electrode plate. The positive current collector includes a first coated section alone. The first coated section is located in the first direction (winding direction) of the first blank foil section. The distance A from the positive tab to the first termination end is 1000 mm. No active material layer is applied in the second direction (opposite to the winding direction) of the positive tab, and B = 0.
C = 920 mm; D = 90 mm; T1 = 8.5 $\mu$m; and T2 = 5.5 $\mu$m.

**Comparative Embodiment 1**

Differences from Embodiment 1 are as follows:
A = 400 mm; B = 500 mm; C = 610 mm; and D = 400 mm.

**Comparative Embodiment 2**

Differences from Embodiment 1 are as follows:
A = 600 mm; B = 400 mm; C = 460 mm; and D = 550 mm.

**Test of magnetic field intensity**

Test instrument: AP audio analyzer and IEC711 ear simulator.
Test environment: anechoic room, background noise being -15 DB (decibel).
Pass criterion: sound $\leq$ -5 DB.
Test method: An ear simulator is placed in the test environment. The audio analyzer sends a standard silent test audio. The audio passes through the ear simulator, and is then transmitted to the audio analyzer. By analyzing the transmitted audio signal versus the received audio signal, the noise floor of the ear simulator is measured. The magnetic field intensity can be determined based on the noise floor of the ear simulator.
The test results are shown in Table 1 below.

**Table 1**

| | A (mm) | B (mm) | C (mm) | D (mm) | T1 ($\mu$m) | W1 (mm) | T2 ($\mu$m) | W2 (mm) | [A/(T1 × W1) + D/(T2 × W2)]/[B/(T1 × W1) + C/(T2 × W2)] | Noise floor of ear simulator (DB) |
|---|---|---|---|---|---|---|---|---|---|---|
| Embodiment 1 | 500 | 500 | 505 | 505 | 9 | 72.7 | 5 | 74.2 | 1.0 | -6.2 |
| Embodiment 2 | 450 | 550 | 580 | 440 | 8.5 | 72.7 | 6.5 | 74.2 | 0.78 | -5 |
| Embodiment 3 | 450 | 550 | 560 | 450 | 9 | 72.7 | 5 | 74.2 | 0.83 | -5.1 |
| Embodiment 4 | 500 | 500 | 560 | 450 | 9 | 72.7 | 5 | 74.2 | 0.87 | -5.6 |
| Embodiment 5 | 550 | 450 | 560 | 450 | 9 | 72.7 | 5 | 74.2 | 0.94 | -6 |
| Embodiment 6 | 550 | 450 | 510 | 500 | 9 | 72.7 | 5 | 74.2 | 1.05 | -5.8 |
| Embodiment 7 | 600 | 400 | 510 | 500 | 7 | 72.7 | 6 | 74.2 | 1.19 | -5 |
| Embodiment 8 | 1000 | 0 | 1020 | 0 | 8 | 72.7 | 6.5 | 74.2 | 0.81 | -5.4 |
| Embodiment 9 | 950 | 50 | 1020 | 0 | 7.5 | 72.7 | 7 | 74.2 | 0.84 | -5.2 |
| Embodiment 10 | 1000 | 0 | 920 | 90 | 8.5 | 72.7 | 5.5 | 74.2 | 0.81 | -5.2 |
| Comparative Embodiment 1 | 400 | 500 | 610 | 400 | 9 | 72.7 | 5 | 74.2 | 0.7 | -3.7 |

(continued)

| | A (mm) | B (mm) | C (mm) | D (mm) | T1 ($\mu$m) | W1 (mm) | T2 ($\mu$m) | W2 (mm) | [A/(T1 × W1) + D/(T2 × W2)]/[B/(T1 × W1) + C/(T2 × W2)] | Noise floor of ear simulator (DB) |
|---|---|---|---|---|---|---|---|---|---|---|
| Comparative Embodiment 2 | 600 | 400 | 460 | 550 | 9 | 72.7 | 5 | 74.2 | 1.3 | -4.1 |

The magnetic field intensity affects the value of the noise floor of the ear simulator. The higher the magnetic field intensity, the higher the noise floor of the ear simulator; the lower the magnetic field intensity, the lower the noise floor of the ear simulator. As can be seen from Table 1, with reference to Embodiments 1 to 10 and Comparative Embodiments 1 to 2, when the parameters satisfy $0.78 \leq [A/(T1 \times W1) + D/(T2 \times W2)]/[B/(T1 \times W1) + C/(T2 \times W2)] \leq 1.2$, the noise floor of the ear simulator is less than or equal to -5 DB, the magnetic field intensity can be reduced significantly, thereby reducing the impact on the current sound of the ear simulator. In an embodiment of this application, the following relationship is satisfied: $0.8 \leq [A/(T1 \times W1) + D/(T2 \times W2)]/[B/(T1 \times W1) + C/(T2 \times W2)] \leq 1.2$. Further, with reference to Embodiments 1, 5, and 6, it can be seen that when the parameters satisfy $0.94 \leq [A/(T1 \times W1) + D/(T2 \times W2)]/[B/(T1 \times W1) + C/(T2 \times W2)] \leq 1.05$, the noise floor of the ear simulator is less than or equal to -5.8 DB, the noise floor of the ear simulator is further reduced. In embodiments of this application, the parameters satisfy $0.94 \leq [A/(T1 \times W1) + D/(T2 \times W2)]/[B/(T1 \times W1) + C/(T2 \times W2)] \leq 1.05$. In addition, with reference to Embodiments 1 to 10, it can be seen that when $[A/(T1 \times W1) + D/(T2 \times W2)]/[B/(T1 \times W1) + C/(T2 \times W2)]$ is closer to 1, the noise floor of the ear simulator is lower, so that the impact of the magnetic field on the current sound of the ear simulator can be minimized.

According to a second aspect, an embodiment of this application further discloses an electrochemical device. The electrochemical device includes a housing and the electrode assembly according to any one of the embodiments in the first aspect. The electrode assembly is accommodated in the housing. Both the positive tab and the negative tab extend out of the housing.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

Claims

1. An electrode assembly, formed by winding a positive electrode plate, a separator, and a negative electrode plate that are stacked, wherein the separator is disposed between the positive electrode plate and the negative electrode plate, and the positive electrode plate is located on one side of the negative electrode plate, the side facing away from a winding center of the electrode assembly, **characterized in that**

the positive electrode plate comprises a positive tab, a positive current collector, and a positive active material layer; the positive tab is connected to the positive current collector; the positive active material layer is disposed on at least one surface of the positive current collector; a thickness of the positive current collector is T1, and a width of the positive current collector is W1;
along a first direction, the positive current collector comprises a positive electrode winding start end and a positive electrode winding termination end; an end of the positive active material layer, which is closest to the positive electrode winding start end, is a first start end, and an end of the positive active material layer, which is closest to the positive electrode winding termination end, is a first termination end; along the first direction, a distance from the positive tab to the first termination end is A; along a second direction, a distance from the positive tab to the first start end is B; the first direction is a winding direction of the electrode assembly, and the second direction is opposite to the first direction;

the negative electrode plate comprises a negative tab, a negative current collector, and a negative active material layer; the negative tab is connected to the negative current collector; the negative active material layer is disposed on at least one surface of the negative current collector; a thickness of the negative current collector is T2, and a width of the negative current collector is W2;

along the first direction, the negative current collector comprises a negative electrode winding start end and a negative electrode winding termination end; an end of the negative active material layer, which is closest to the negative electrode winding start end, is a second start end, and an end of the negative active material layer, which is closest to the negative electrode winding termination end, is a second termination end; along the first direction, a distance from the negative tab to the second termination end is C; along the second direction, a distance from the negative tab to the second start end is D; and

$$0.8 \leq [A/(T1 \times W1) + D/(T2 \times W2)]/[B/(T1 \times W1) + C/(T2 \times W2)] \leq 1.2,$$

wherein W1 < W2.

2. The electrode assembly according to claim 1, **characterized in that** $0.94 \leq [A/(T1 \times W1) + D/(T2 \times W2)]/[B/(T1 \times W1) + C/(T2 \times W2)] \leq 1.05$.

3. The electrode assembly according to claim 1 or 2, **characterized in that** the positive current collector comprises a first blank foil section and a first coated section, and the first blank foil section and the first coated section are sequentially arranged along the first direction; and
   the positive tab is connected to the first blank foil section, and the first coated section is coated with the positive active material layer.

4. The electrode assembly according to claim 3, **characterized in that** the positive current collector further comprises a second coated section; and the second coated section, the first blank foil section, and the first coated section are sequentially arranged along the first direction; and
   the second coated section is coated with the positive active material layer.

5. The electrode assembly according to any one of claims 1 to 4, **characterized in that** the positive current collector comprises a first blank foil section and a first coated section, and the first blank foil section and the first coated section are sequentially arranged along the second direction; and
   the positive tab is connected to the first blank foil section, and the first coated section is coated with the positive active material layer.

6. The electrode assembly according to any one of claims 1 to 5, **characterized in that** the negative current collector comprises a second blank foil section and a third coated section, and the second blank foil section and the third coated section are sequentially arranged along the first direction; and
   the third coated section is coated with the negative active material layer, and the negative tab is connected to the second blank foil section.

7. The electrode assembly according to claim 6, **characterized in that** the negative current collector further comprises a fourth coated section; and the fourth coated section, the second blank foil section, and the third coated section are sequentially arranged along the first direction; and
   the fourth coated section is coated with the negative active material layer.

8. The electrode assembly according to any one of claims 1 to 7, **characterized in that** the negative current collector comprises a second blank foil section and a third coated section, and the second blank foil section and the third coated section are sequentially arranged along the second direction; and
   the third coated section is coated with the negative active material layer, and the negative tab is connected to the second blank foil section.

9. The electrode assembly according to any one of claims 1 to 8, **characterized in that** the electrode assembly further comprises a first insulation piece and a second insulation piece;

   the first insulation piece is disposed on the positive active material layer, and the first insulation piece covers the positive tab; and

the second insulation piece is disposed on the negative active material layer, and the second insulation piece covers the negative tab.

10. An electrochemical device, **characterized in that** the electrochemical device comprises a housing and the electrode assembly according to any one of claims 1 to 9; and
the electrode assembly is accommodated in the housing, and both the positive tab and the negative tab extend out of the housing.

100

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| | International application No. |
|---|---|
| | **PCT/CN2024/107287** |

| A. | CLASSIFICATION OF SUBJECT MATTER |
|---|---|
| | H01M10/0587(2010.01)i; H01M10/0525(2010.01)n |

According to International Patent Classification (IPC) or to both national classification and IPC

| B. | FIELDS SEARCHED |
|---|---|

Minimum documentation searched (classification system followed by classification symbols)

   IPC:H01M

Documentation searched other than minimum documentation to the extent that such documents are included in the fields searched

Electronic data base consulted during the international search (name of data base and, where practicable, search terms used)

   CNABS, CNTXT, VEN, USTXT, CNKI, IEEE: 正极, 负极, 隔离膜, 卷绕, 集流体, 距离, 极耳, 起始端, 尾端, 磁, 消除, anode, cathode, positive, negative, baffle, barrier, convolute, collector, distance, tab, beginning, tail, backend, magnetism, eliminate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117039197 A (NINGDE AMPEREX TECHNOLOGY LTD.) 10 November 2023 (2023-11-10) claims 1-10 | 1-10 |
| A | CN 116646616 A (NINGDE AMPEREX TECHNOLOGY LTD.) 25 August 2023 (2023-08-25) description, paragraphs 54-77 | 1-10 |
| A | CN 105914339 A (JI'AN UTILITY TECHNOLOGY CO., LTD.) 31 August 2016 (2016-08-31) entire document | 1-10 |
| A | US 7501200 B2 (SAMSUNG SDI CO., LTD.) 10 March 2009 (2009-03-10) entire document | 1-10 |

☐ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 October 2024** | **21 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107287**

| Patent document cited in search report | | | Publication date (day/month/year) | Patent family member(s) | | | Publication date (day/month/year) |
|---|---|---|---|---|---|---|---|
| CN | 117039197 | A | 10 November 2023 | None | | | |
| CN | 116646616 | A | 25 August 2023 | None | | | |
| CN | 105914339 | A | 31 August 2016 | None | | | |
| US | 7501200 | B2 | 10 March 2009 | KR | 20040006639 | A | 24 January 2004 |
| | | | | CN | 1479394 | A | 03 March 2004 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311152361